(19) Europäisches Patentamt / European Patent Office / Office européen des brevets

(11) **EP 4 435 214 A1**

(12) **EUROPEAN PATENT APPLICATION**

(43) Date of publication:
**25.09.2024 Bulletin 2024/39**

(21) Application number: **23163897.4**

(22) Date of filing: **24.03.2023**

(51) International Patent Classification (IPC):
**E05C 3/14** $^{(2006.01)}$　　**E05B 15/00** $^{(2006.01)}$
**F16P 1/00** $^{(2006.01)}$　　**E05B 65/00** $^{(2006.01)}$
**E05B 51/02** $^{(2006.01)}$

(52) Cooperative Patent Classification (CPC):
**E05B 15/0093; E05B 51/023; E05B 65/0007;**
**E05C 3/14; F16P 1/00;** E05B 2015/023;
E05C 2003/128

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Troax AB**
**335 04 Hillerstorp (SE)**

(72) Inventor: **Bengtsson, Staffan**
**335 33 GNOSJÖ (SE)**

(74) Representative: **Bergenstråhle & Partners AB**
**P.O. Box 17704**
**118 93 Stockholm (SE)**

(54) **DOOR ARRANGEMENT WITH SAFETY LATCH**

(57)　Door arrangement (1) comprising a door (50), first and second frame parts (61, 62), a stop (11) and a support (21) both fixed at the first frame part (61), wherein the support (21) is arranged below the stop (11) in a vertical direction (Y), a safety latch (40) comprising a first end (41) and an opposite free second end (42), wherein the safety latch (40) is pivotally attached to the door (50) and comprises a hook part (45) arranged at the second end (42). The second end (42) is introducible between the stop (11) and the support (21), and the hook part (45) is arranged to interact with the stop (11). A lower side (44) of the safety latch (40) is arranged to interact with the support (21), and comprises a transition point (44a), arranged between the first and second ends (41, 42), at which the lower side (44) bends upwards towards the free second end (42).

Fig. 7a

**Description**

Technical field

The present invention relates generally to a door arrangement arranged with a safety latch, which is arranged such that the door is possible to open in a normal opening of the door, but which safety latch prevents opening of the door when the door is subjected to a strong acceleration, for example by that a heavy object hits the door. Preferably, the door arrangement is used in connection with safety protection around a machine, where the door is a part of a system for shielding of an area around the machine.

Background art

Especially in many of today's industries there is a need to provide shielding, for example around machines. Shielding around machines, so-called machine safeguards, aim to prevent that persons by mistake get into a machine working area and thereby run the risk of getting injured, or to prevent unauthorized persons to control the machine. A machine safeguard may also be used to catch details which are machined, but which are accidentally dropped by the machine or a robot, which works on the inside of the machine safeguard.

There are a lot of legal requirements which applies to such shielding and machine safeguards. One example of this is that it shall not be possible to open the machine safeguard from the outside without a key or any particular tool. It shall neither be possible to arrange parts of the machine safeguard in a mounted position without them being locked in the above-described way. Thus, the machine safeguard shall not be designed in such a way that it by mistake or intentionally is unlocked without this being obvious. An example of a machine safeguard of this type is shown in protected by the applicant by the patent EP 2 602 407 B1, wherein a series of grating sections (wall elements) are mounted between upright standing posts of steel.

Nevertheless, it must be possible to access the machine, robot or the like, arranged inside the shielded area, for supplying details, maintenance, programming etc. To access the machine or the robot etc., inside the shielded area, one or several doors may be arranged as a part of the machine safeguard. It is of great importance that the door is as safe as the other parts of the machine safeguard, for example such safeguards described in EP 2 602 407 B1.

There are a number of different kinds of doors for use in connection to machine safety, for example single and double hinged doors, double rail sliding doors, telescopic sliding doors etc. Known doors further comprises a number of different types of door locks, adapted for cope machine safety standards, and one further important feature of a door in connection to machine safety is to provide an emergency exit function of the door. Thus, the door must both make sure that it will not accidentally open if an object hits the door as discussed above, and also it must be possible to open under normal opening as well as under an emergency situation. Known solutions, for example an espagnolette solution, could be used for strengthening the door for coping with a situation where an object accidentally hits the door, but an espagnolette solution may not be used in connection to any kind of door lock for coping with emergency evacuation. There is no solution known in the market which provides high security in combination with emergency exit possibility regardless the type of door lock.

Thus, there is a need of a solution for a hinged door for machine safeguard use, which gives easy access to the shielded area during normal use, handles emergency exit function and still has high safety regarding heavy impact to the door when the door is in a closed position.

Summary of invention

An object of the present invention is to provide a door arrangement, which is easy to open but with high security regarding heavy impact on the door. The objects is met by a door arrangement according to claim 1.

According to an aspect, a door arrangement is disclosed. The door arrangement comprises a door, a first frame part and a second frame part, wherein the first and second frame parts extends in a vertical direction, wherein the first frame part faces an opening side of the door, and the second frame part faces a hinge side of the door. The door is hingely connected to the second frame part. The first and second frame parts may for example be a first and a second post, a first and second wall, or the like. The door arrangement further comprises a stop, which is fixedly arranged at the first frame part, and a support, which also is fixedly arranged at the first frame part, wherein the support is arranged below the stop, referring to the vertical direction, at a first vertical distance from the stop. Thus, an opening is defined between the stop and the support, wherein the first vertical distance in the vertical direction defines the height of the opening.

The door arrangement further comprises a safety latch, which comprises a first end and an opposite free second end. The safety latch is pivotal around a pivot point by that the first end is pivotally attached to the door, at the opening side of the door, and at a vertical position in the vertical direction, which substantially corresponds with the vertical position of the opening. In the safety latch's pivotal attachment to the door, the safety latch extends in a substantially horizontal direction, by that the safety latch is arranged to be limited in its pivotal movement around the pivot point, such that the free second end has a maximum movement in the vertical direction. This may be solved in numerous ways, and the meaning of "extends in a substantially horizontal direction", is that the safety latch is arranged such that it not is totally free pivotal around the pivot point, for example such that the safety latch points vertically downwards due to gravity, but instead is limited such that the free second end "points" more horizontally than vertically, when gravity is subjected to the safety latch.

Referring to the safety latch's pivotal attachment to the door, the safety latch comprises an upper side and an opposite lower side, and a hook part is arranged at the free second end of the safety latch. The hook part protrudes from the upper side in direction away from the lower side (i.e. substantially upwards referring to the mounted position). The safety latch is introducible in the opening and depending on the substantially horizontal extension of the safety latch, it is introducible in the opening (between the stop and support) without being operated by hand (lifted or lowered) just by closing the door. The hook part is arranged to interact with the stop and the lower side of the safety latch is arranged to interact with the support. The lower side comprises a transition point, which is arranged between the first end and the second end of the safety latch, at which transition point, the lower side bends upwards towards the free second end.

Such a solution facilitates a simple opening of the door under "normal" conditions as well as stopping the opening of the door when the door is subjected to a sudden hit from a heavy object. Further, this solution may be combined with any kind of door lock on the market, which is not possible with known solutions. As mentioned above, when closing the door, the safety latch enters the opening without being operated by hand, depending on the substantially horizontal extension of the safety latch. In the closed position, the lower side rests on the support. When opening the door in a normal way (with a normal speed so to speak), from its closed position between the first and second frame parts, the lower side of the safety latch slides on the support, due to gravity force. Thus, depending on that the lower side bends upwards towards the free second end, the safety latch lowers after the transition point reaches the support and during the continued opening of the door, wherein the safety latch is lowered sufficiently enough, such that the hook part passes below the stop. When the door is open too fast, for example due to an object hitting the door, and the acceleration in the "substantially horizontal direction" exceeds the gravity, the safety latch doesn't have time to drop fast enough to pass under the stop, and the hook part interacts with the stop, and the door is stopped from opening. The opening between the stop and the support may for example be a part of a bracket mounted on the first frame part or for example an opening arranged in the first frame part or the like.

According to an embodiment, a first measure between the upper side and the lower side of the safety latch, decreases in direction from the transition point towards the free second end, at least along a part of the lower side from the transition point towards the free second end. This means that the safety latch, in direction from the transition point towards the free second end, is narrower compared to the distance between the upper side and the lower side at the transition point, at least along a part of the safety latch. The effect of that is that the safety latch may have its lowermost horizontal position below the level of the support, and during closing of the door, the lower side slides over the support and the safety latch is guided into the opening. When opening the door in a normal way, the safety latch lowers in the same way as described above. By this design, the height of the opening may be quite small as well as the extension of the safety latch is quite short, wherein less material is used.

According to an embodiment, a second measure between the upper side and the lower side of the safety latch, decreases in direction from the transition point towards the first end, at least along a part of the lower side from the transition point towards the first end. This means that a "hill" is formed between the first end and the transition point, wherein during a heavy acceleration of the door, the hill contributes to an upward motion of the free second end of the safety latch, wherein the hook part more securely and quicker engages with the stop.

According to an embodiment, a second vertical distance in the vertical direction, between an upper edge of the hook part and the transition point of the lower side is greater than the first distance between the stop and the support. By this arrangement, it is clear that the transition point of the lower side and the upper edge of the hook part of the upper side isn't arranged vertically below each, but instead the transition point is arranged on either side of the upper edge of the hook part. Otherwise, the safety latch couldn't be introduced into the opening between the stop and the support. Thus, the transition point is arranged either between the first end of the safety latch and the upper end of the hook part, which is preferred, or on the other side, between the upper edge of the hook part and the free second end of the safety latch. By this design, the hook part and especially its upper edge, will engage with the stop in a more secure way compared to if the second vertical distance would be smaller than the distance between the upper edge of the hook part and the transition point of the lower side.

According to an embodiment, the safety latch is introducible in the opening, by that a third vertical distance in the vertical direction, between the upper edge of the hook part and a fictive first point of the lower side, arranged vertically below the upper edge of the hook part, is less than the first distance between the stop and the support, and less than the second vertical distance between the upper edge of the hook part and the transition point of the lower side. By this design, the safety latch is easy to introduce into the opening since it is both arranged in a substantially horizontal way, such that the free second end is "pointing" towards the opening between the stop and the support, and further narrower below in direction from the transition point towards the free second end. This, together with the upward bending of the lower side, makes the safety latch introducible in the opening automatically, when closing the door. This is also very positive when opening the door in a normal way, wherein the lower side of the safety latch slides over the support and the safety latch lowers such that the hook part passes below the stop.

According to an embodiment, the transition point is arranged between the first end and the fictive first point of the lower side of the safety latch. This means that the safety latch may be as short as possible, since the hook part is arranged closer to the free second end compared to the transition point, and the transition point contributes to both the easy opening and closing during normal conditions, as well as contributes to a fast and secure stopping of the opening of the door when the opening acceleration is too high, for example caused by an accident where an object hits the door from the inside of the shielded area.

According to an embodiment, the stop and the support are parts of a common bracket, which comprises a bracket body, which is fixedly arranged at the first frame part. This is positive since it is easy to mount one detail on the first frame part instead of two separate parts.

According to an embodiment, the stop and the support protrudes from a first body part of the bracket body, which first body part faces the second frame part, in direction away from the first frame part towards the second frame part. The first body part of the bracket body engages with the side of the first frame part, which faces the door opening/the door/the second frame part, and the stop and the support thus extends in the play between the door blade (opening side of the door) and the first frame part. This means that safety latch is arranged such that, when the door is closed, it also enters the play between the door blade and the first frame part, and the enters the opening between the stop and the support.

According to an embodiment, the stop and the support are connected to each other by a shackle part, which connects the stop and the support, wherein the shackle part is distal from the first body part of the bracket body, wherein a first horizontal width between the first body part of the bracket body and the shackle part defines a width of the opening, wherein the safety latch is introducible in the opening. The shackle provides a number of advantages, such as it strengthens the stop and the support by connecting them, such that they do not comprise a free end distal from the part of the bracket from which they protrude. Further, the shackle part encloses the opening such that a "window" is formed, in which window/opening the safety latch is controlled and prevented from leaving its "securing position" between the stop and the support. By that, the safety latch is always ready to engage with the stop and prevented from leaving its securing position, by that the shackle part prevents the safety latch from not being in its ready position.

According to an embodiment, the shackle part is bent relative the stop and the support, wherein the shackle part has an angle relative the first body part of the bracket body (and of course has an angle relative the stop and the support). By this, the shackle part both provides improved strength to the stop and the support, as well as provides a guiding of the safety latch towards the opening between the stop and the support. The latter since it is angled relative the part of the bracket body (and by that relative the first frame part).

According to an embodiment, the angle of shackle part relative the first body part of the bracket is between $0° < \alpha \leq 60°$. This gives a good guiding of the safety latch towards the opening.

According to an embodiment, a horizontal distance between the pivot point and a center of gravity of the safety latch is defined as a horizontal first distance $d_1$, and a horizontal distance between the pivot point and the hook part is defined as a horizontal second distance $d_2$, and when the door is in its closed position, in which the safety latch is introduced in the opening, a horizontal distance between the stop and the hook part is defined as a horizontal third distance $d_3$ and a vertical distance between the upper edge of the hook part and a lower edge of the stop, is defined as a vertical fourth distance $d_4$, wherein a correlation of the horizontal first, horizontal second, horizontal third and vertical fourth distances ful-

$$\sqrt{\frac{2*d_4}{g*\frac{d_2}{d_1}}} = \sqrt{\frac{2*d_3}{a}}$$

fils the expression , where g is standard gravity, wherein a is defined as the horizontal acceleration of the safety latch relative the stop, wherein a > 4*g. When this design of the door arrangement is fulfilled, the door may be opened under normal condition, up to at least an "opening acceleration" of 4g. When the acceleration exceeds 4g, the safety latch engages with the stop. It is tested that, when a door or a shielding fence is subjected to heavy impact, which is an impact that could be dangerous, the acceleration exceeds 25g. By having a lower limit of 4g, the door is easily opened, and the safety latch (hook part) does not engage with the stop. The range between 4g - 25g is a safety range, and for minor to medium impact on the door, say 10g-15g, the door is prevented from opening, but closer to 4g, for example up to 10g, it is okay that the safety latch does not engage with the stop, since the strength of the door itself and its door lock normally copes with these levels of acceleration, while higher acceleration is not handled by the door strength of the door itself or known door locks, wherein the inventive solution handles this by preventing accidental opening of the door when subjected to high acceleration.

According to an embodiment, a center of gravity of the safety latch is arranged between the pivot point of the safety latch and the transition point of the lower side of the safety latch.

According to an embodiment, the first end of the safety latch is distal from the pivot point, wherein the first end and the free second end are arranged on opposite sides of the pivot point, wherein the safety latch is limited in its pivotal movement around the pivot point by limitation means, arranged on the opening side of the door, on opposite sides of the first end of the safety latch. Preferably, the limitation means is arranged as a bracket, arranged on the opening side of the door, and which comprises an opening, which encloses the first end of the safety latch. The limitation means thereby engages with the first end of the safety latch and prevents it from pivoting freely around its pivot point, wherein the safety latch has a substantially horizontal arrangement on the door.

Brief description of drawings

The invention is now described, by way of example, with reference to the accompanying drawings, in which:

Fig. 1a shows an isometric view of a part of a system for shielding an area comprising a first and second post and a door, and Fig. 1b is a closeup view of an upper end of the first post of Fig. 1a.

Fig. 2a show an isometric view of the part of the system for shielding an area of Fig. 1a, but in a view from the opposite side (i.e. from an inside of the shielded area), and where the second post is removed. Fig. 2b is a closeup view of the upper end of the first post of Fig. 2a.

Fig. 3a-d show different views of a bracket according to the invention, which is also visible in Figs. 1a-b and Figs. 2a-b.

Fig. 4 shows a side view of a safety latch according to the invention, which is also visible in Figs. 2a-b.

Fig. 5 shows a principle side view of the safety latch of Fig. 4 when inserted in an opening, between a stop and a support of the bracket of Figs. 3a-d.

Fig. 6a shows a side view of the door arrangement according to the invention, seen from the door side, such as standing in the door opening, when the door is about to be closed. Fig. 6b shows an isometric view of a limitation means arranged to limit a vertical movement of the safety latch, the limitation means is visible in Fig. 6a.

Figs. 7a-c show side views of different stages during a closing of the door. Fig. 7d, shows a side view of a stage when the door is subjected to a high force, and the safety latch engages with the stop, to prevent an accidental opening of the door.

Description of embodiments

In the following, a detailed description of a door arrangement 1 according to the invention is disclosed in detail in respect of embodiments and in reference to the accompanying drawings. All examples herein should be seen as part of general description and therefore possible to combine in any way in general terms.

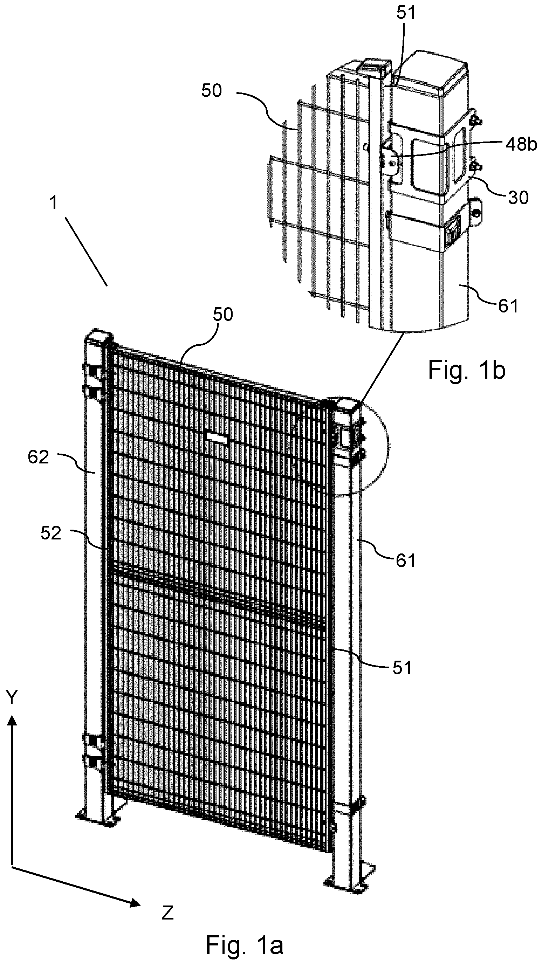

Fig. 1a shows a part of a system for shielding an area, for example for use as a machine safeguard or the like. The system is typically seen to be used in an industrial room, even if numerous other applications are possible. The part of the system seen in fig 1a comprises a door arrangement 1, with a door 50, which door arrangement 1 is arranged with a safety arrangements to prevent the door from being opened accidentally, when subjected to a sudden hit or the like. In Fig. 1a, the door arrangement 1 is seen from a front side, which in the shielding system around for example a moving machine or robot, faces away from the machine, which means that the door 50 is opened in direction towards a user outside the shielded area. The door arrangement 1 comprises the door 50 arranged between a first frame part 61 and a second frame part 62, which in this embodiment is a first and second post 61, 62, but could of course be a part of a first and second wall parts on opposite sides of the door. The first and second frame parts 61, 62 extends in a vertical direction Y and the door 50 has an extension is the vertical direction Y as well as in a horizontal direction Z. The first frame part 61 faces an opening side 51 of the door 50 and the second frame part 62 faces a hinge side 52 of the door 50. Thus, the door 50 is hingely connected to the second frame part 62. The first and second posts 61, 62 in the preferred embodiment are manufactured of metal, typical seen robust sheet metal, which has been given a rectangular cross section. At the lower end of each post 61, 62, an anchor means is provided for anchoring the posts 61, 62 in a foundation, for example a floor. At the upper end of each post 61, 62, an end means is provided, which prevent dirt from accumulating inside the post. Even if Fig. 1a shows the door 50 with gratings it is of course possible to use other materials. The hinges is not further described and may be any form of known hinges for hinged connection of the door to the second post 62 (second frame part).

Around the upper end of the first post 61, an enclosing bracket 30 is arranged, which is better seen in Fig. 1b. Fig. 1b is a closeup view of the upper end of the first post 61 of Fig. 1a. In Fig. 1b, the door 50 is in a closed position, where the opening side 51 is close to the first post 61, and an angled stop limiter 48b is visible, which is arranged to prevent the door 50 from opening inwards, towards the machine/inside of the shielded area.

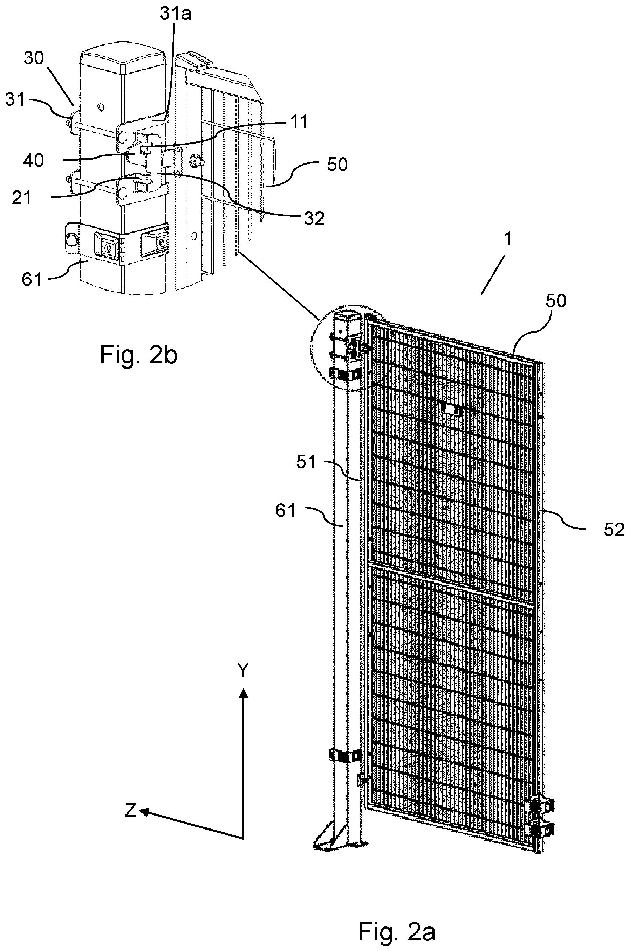

Fig. 2a show a view from the opposite side of the door 50 (i.e. from the inside of the shielded area), and the second post 62 is removed in the figure. Fig. 2b is s a closeup view of the upper end of the first post 61 of Fig. 2a. As mentioned above, the bracket 30 is arranged at the upper end of the first post 61, and the bracket 30 comprises a bracket body 31 which is fixedly arranged at the first frame part 61, by means of two screws and two nuts which clamps the bracket 30 to the first post 61. The bracket body 31 of the bracket 30 comprises a body part 31a, which faces the second frame part 62 and the opening side 51 of the door 50 (when the door is in a closed position). The door arrangement 1 is further arranged with a stop 11 and a support 21, which stop 11 and support 21 are fixedly arranged at the body part 31a of the bracket body 31 of the bracket 30. The stop 11 and the support 21 are arranged such that they protrude from the first body part 31a in direction away from the first frame part 61, towards the second frame part 62, in the bracket's 30 mounted position on the first frame part 61. The stop 11 and the support 21 are connected to each other by a shackle part 32, wherein the shackle part 32 is distal from the body part 31a of the bracket body 31. The door arrangement 1 is further arranged with a safety latch 40, which is pivotally attached to the opening side 51 of the door 50, preferably by means of a screw, which allows a pivotal attachment of the safety latch to the door 50. The safety latch 40 is hook-shaped and is arranged such that it has a substantial horizontal direction (extension in a horizontal direction X, which is similar with an opening/closing direction of the door 50) in its pivotally mounted position on the door 50, such that the safety latch 40 is introducible between the stop 11 and the support 21. This will be further explained below. A hook part 45 of the safety latch 40 is arranged to interact with the stop 11, to prevent the opening of the door 50 if the opening speed (acceleration) of the door is too high, for example caused by an object falling hitting the door from the inside of the shielded area (from a machine side).

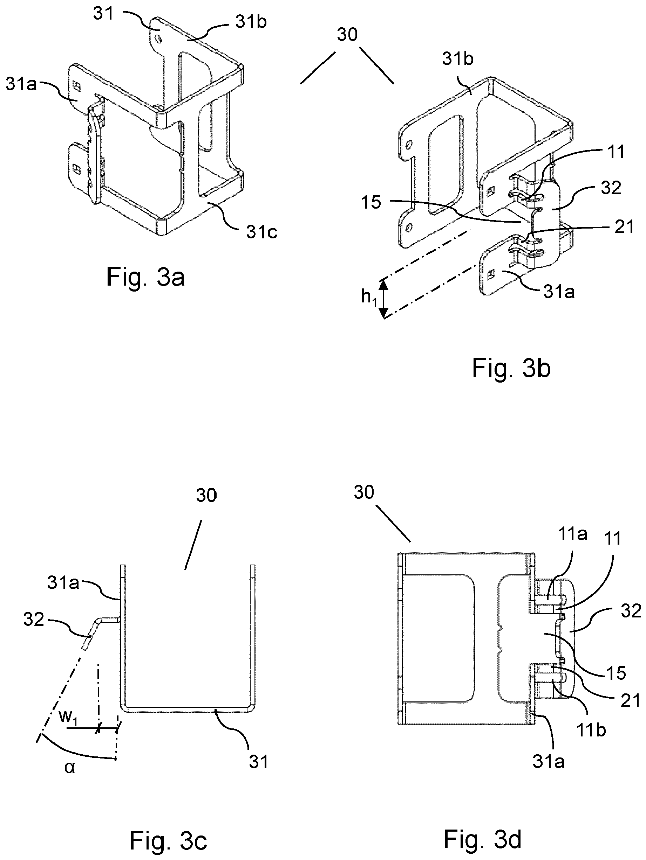

Fig. 3a-d show different views of the bracket 30, where Fig. 1a-b shows isometric views of the bracket 30, Fig.1c shows a top view and Fig. 3d shows a side view of the bracket 30. The bracket 30 is "tube-shaped" to fit around a post (the first post/frame part 61) and is arranged as a bracket body 31 with three sides/body parts and an open side. The first body part 31a is arranged such that it, in a mounted position of the bracket 30 on the first post 61, faces the second post 62 (second frame part 62). Opposite the first body part 31a is a second body part 31b arranged and the first and second body parts 31a, 31b are connected by a third body part 31c. Opposite the third body part 31c is the open side, wherein the bracket 30 may be mounted to the first post 61 by applying the bracket 30 on the first post 61 from the opening side to an enclosing position around the first post 61. When this is done, the bracket 30 is secured to the first post 61 (fixed to the post) by two screws and two nuts, which clamps the bracket 30 on the first post 61, as seen in for example Fig. 2b. The screws are inserted through holes of the first and second body parts 31a, 31b, and by screwing the screw/nuts, the bracket 30 is clamped to the first post 61, see Fig. 2b.

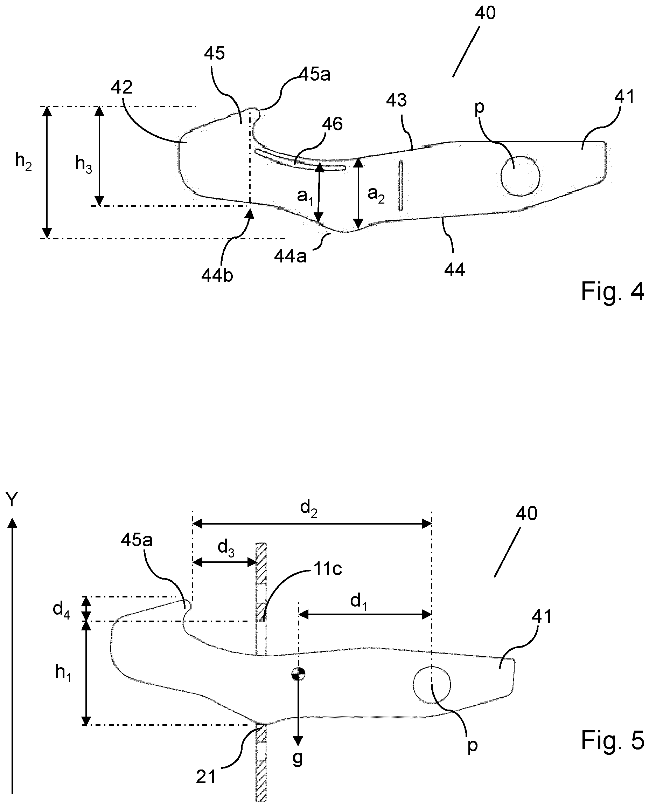

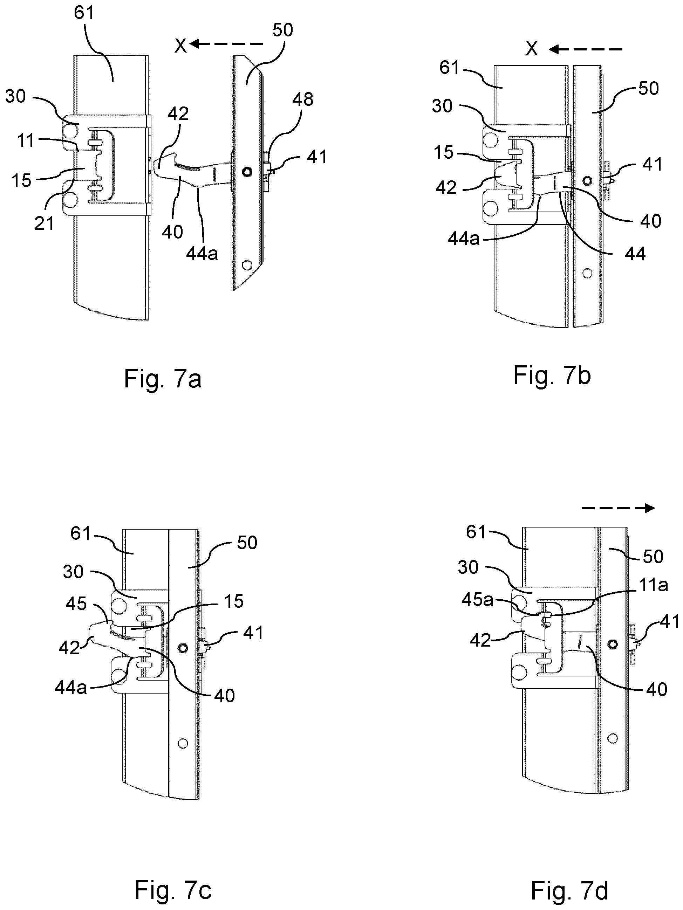

As mentioned above, the shackle part 32 connects the stop 11 and the support 21 of the bracket 20, and since the stop 11 and support 21 are arranged such that they protrude from the first body part 31a in direction away the same, the shackle part 32 is distal from the body part 31a, wherein an opening 15 is formed, both between the stop 11 and the support 21, and between the shackle part 32 and the first body part 31a / the first post 61. A first vertical distance $h_1$, between the stop 11 and the support 21 forms a height of the opening 15, and a first horizontal width $w_1$, between the body part 31a of the bracket body 31 and the shackle part 32, defines a width of the opening 15. The opening 15 is arranged to receive a second end 42 of the safety latch 40, which second end is introducible in the opening 15 (see further Figs. 5 and 7a-c). The stop 11 comprises at least one upper slit 11a, and preferably a lower slit 11b, wherein the upper slit 11a has a function of keeping the hook part 45 of the safety latch 40 in a more secure position, at least for a short while, when the safety latch 40 has engaged with the stop 11. This will be explained further in connection with Fig. 7d. The shackle part 32 is bent relative the stop 11 and the support 21, wherein the shackle part 32 has an angle $\alpha$ relative the first body part 31a of the bracket body 31 of the bracket 30, wherein the angle $\alpha$ preferably is between $0° < \alpha \le 60°$. The function of this is to guide the safety latch 40 into the opening 15 when closing the door, and in the closed position, the safety latch 40 is in a secure position in the opening and ready to engage with the stop 11 if an accident will occur (the door subjected to a hit from an object or the like). Thus, the shackle part 32 provides an protection against falling of the support 21, if the door safety latch 40 (and the door 50) by some reason would move in the horizontal direction X, away from the first post 61. The lower slit 11b is arranged to provide the same detail as a "right" or "left" option, depending on which is the hinge side of the door arrangement. Thus, the same bracket may be used for either side, which is economic and more production friendly for the concept.

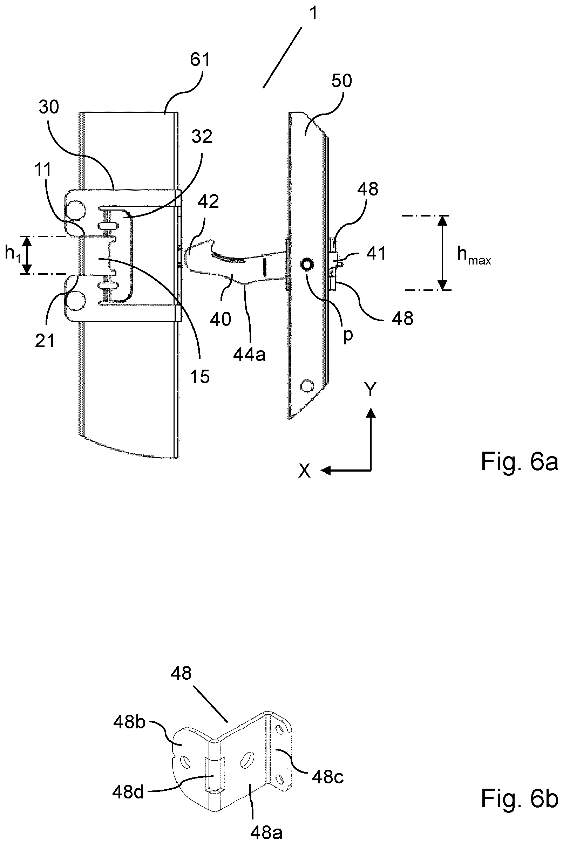

Fig. 4 shows a side view of the safety latch 40, which has a first end 41 and an opposite second end 42. The second end 42 is in its mounted position on a door, a "free" end so to speak, since the safety latch 40 is pivotally mounted to the door at a pivot point p, which is arranged as a hole in the safety latch 40, through which a screw (or the like) is arranged. The screw is arranged in such a way that the safety latch 40 is pivotal around the screw/pivot point p but is fixed to the door such that the safety latch 40 may not move away from its pivotal and mounted position on the door (the door is not visible in Fig, 4). The safety latch 40 extends in its pivotal attachment to the door 50, in a substantially horizontal direction X. It is limited in its pivotal movement around the pivot point p, by that the first end 41 extends a bit on the opposite side of the pivot point relative the second end 42, wherein the first end 41 is arranged into an opening 48a of a limiter 48 (see Fig. 6a-b). The limiter 48 makes sure that the safety latch 40 has a substantial horizontal direction, wherein the safety latch 40 has a maximum movement $h_{max}$ in the vertical direction Y (see Fig. 6a). Referring to that the safety latch 40 has a more or less horizontal extension in its mounted position (i.e. functional position), the safety latch 40 comprises an upper side 43 and an opposite lower side 44. The upper side 43 comprises a hook part 45 arranged to interact with the stop 11, and which hook part 45 is arranged at the free second end 42 and protrudes upwards from the upper side 43 (away from the lower side 44). The hook part 45 further comprises an upper edge 45a, which is arranged to interact with the stop 11 and also arranged to interact with the upper slit 11a of the stop 11. The lower side 44 of the safety latch 40 is arranged to interact with the support 21 (see Fig. 5), and the lower side 44 comprises a transition point 44a, which is arranged between the first end 41 and the second end 42. At the transition point 44a, the lower side 44 bends upwards towards the free second end 42. Upwards refers to its mounted position, where the safety latch 40 is substantially horizontally arranged. The transition point 44a is arranged as a "hill", by that a first measure $a_1$ between the upper side 43 and the lower side 44 of the safety latch 40, decreases in direction from the transition point 44a towards the free second end 42, at least along a part of the lower side 44 from the transition point 44a towards the free second end 42, which may be seen in Fig. 4. Further, a second measure $a_2$ between the upper side 43 and the lower side 44 of the safety latch 40, decreases in direction from the transition point 44a towards the first end 41, at least along a part of the lower side 44 from the transition point 44a towards the first end 41. This gives a good functionality of the safety latch 40 in cooperation with its contact with the support 21 during opening and closing of the door and during activation of the security function, where the transition point 44a in the form of a hill gives an upward acceleration of the safety latch 40 and by that a fast activation of the interaction between the hook part 45 and the stop 11, which is further discussed in connection with Fig. 5.

Fig. 5 shows the safety latch 40 when inserted in the opening 15, between the stop 11 and the support 21 when the safety latch 40 is arranged on a door (the door is not visible), and the stop 11 and support 21 are arranged at the first frame part 61 (not visible). The support 21 is arranged below the stop 11 in the vertical direction Y, at the first vertical distance $h_1$ from the stop 11 and defines the height of the opening 15. The safety latch 40 is designed to cooperate with the stop 11 and the support 21, to function both at "normal" opening of the door, such that the lower side 44 of the safety latch 40 rests/slides along the lower side 44 as long as the opening acceleration is low, wherein the hook part 45 doesn't engage with the stop 11, and also at high opening acceleration, wherein the hook part 45 engages with the stop 11. This is explained in detail in connection to Figs. 7a-7d.

A number of distances are to be defined when discussing the design of the safety latch 40 and the cooperation with the stop 11 and support 21, and the height of the opening 15, (the first distance $h_1$). A second vertical distance $h_2$ in the vertical direction Y is defined as the distance between the upper edge 45a of the hook part 45 and the transition point 44a of the lower side 44 of the safety latch 40. The second vertical distance $h_2$ is in the preferred embodiment greater than the first distance $h_1$ between the stop 11 and the support 21. This is positive for the time for interaction between the upper edge 45a of the hook part 45 and the stop 11 and for providing a more secure function of the safety latch 40 to engage with the stop and prevent an accidental opening of the door 50, i.e. to prevent the door from an "explosive" opening, which might injure a person in front of the door.

Further, a third vertical distance $h_3$ in the vertical direction Y, between the upper edge 45a of the hook part 45 and a fictive first point 44b of the lower side 44, which is arranged vertically below the upper edge 45a of the hook part 45, is in the preferred embodiment less than the first distance $h_1$ and less than the second vertical distance $h_2$. The transition point 44a is further arranged between the pivot point p at the first end 41 and the first point 44b of the lower side 44. By this design, the safety latch 40 is first of all easy to introduce in the opening 15 between the stop 11 and support 21, due to the smaller/thinner design below the upper edge 45a of the hook part 45 (in the figure, to the left of the transition point). Secondly, the design and position of the transition point 44a, designed as a "hill" and positioned between the pivot point p and the upper edge 45a of the hook part 45 (seen in its substantial horizontal mounted position), enables an upward acceleration of the safety latch. The latter since the safety latch 40 during heavy acceleration, from its resting position on the support 21, is "pushed" upwards due to the design of the hill/transition point 44a.

A horizontal distance between the pivot point p and a center of gravity of the safety latch 40 is defined as a horizontal first distance $d_1$. Horizontal in this context refers to the substantially horizontal position of the safety latch 40 in its mounted position, and the horizontal direction along the safety latch 40 direction. The center of gravity is indicated in Fig. 5 by a black and white ring from which an arrow g starts, which indicates the gravity subjected to the safety latch 40, and at the preferred design, the center of gravity is arranged between the pivot point p of the safety latch 40 and the transition point 44a of the lower side 44 of the safety latch 40. A horizontal distance between the pivot point p and the upper edge 45a of the hook part 45 is defined as a horizontal second distance $d_2$. When the door 50 is in its closed position, or at least in a position in which the safety latch 40 is introduced in the opening 15, a horizontal distance between the stop 11 and the hook part 45 is defined as a horizontal third distance $d_3$. Further, a vertical distance between the upper edge 45a of the hook part 45 and a lower edge 11c of the stop 11, is defined as a vertical fourth distance $d_4$. To calculate and design the safety latch 40 and the stopping function of the same in cooperation with the stop 11, a correlation between the horizontal first, horizontal second, horizontal third and vertical fourth distances fulfils the expression

$$\sqrt{\frac{2*d_4}{g*\frac{d_2}{d_1}}} = \sqrt{\frac{2*d_3}{a}},$$

where g is standard gravity, wherein a is defined as the horizontal acceleration of the safety latch 40 relative the stop 11. When the horizontal acceleration a fulfils a > 4*g, the hook part 45 (i.e. upper edge 45a) engages with the stop 11 with the design according to the preferred embodiment. At a sudden hit to the door with a dangerous speed and weight of the object hitting the door, the horizontal acceleration may have a value of a > 25*g where there is no doubt that the function of preventing an unintentional opening of the door. In the area between 4*g - 25*g, there normally will be full functionality of the safety function, and at normal opening, or even if a user pulls the open quickly, the horizontal acceleration have a value of a < 4*g.

Fig. 6a shows a side view of the door arrangement 1, seen from the door side, such as standing in the door opening. The safety latch 40 is arranged with a substantially horizontal extension at the door 50, at the opening side 51 of the door 50. The safety latch 40 is substantially horizontal by that the first end 41 is limited by a limitation means 48, which is also visible in Fig. 6b, which shows an isometric view of the limitation means 48. The limitation means 48 is arranged as a bracket of bent sheet metal and comprises a base 48a, and a first shank 48b and a second shank 48c, which both are arranged as bent parts on opposite sides of the base 48a. The first shank 48b is arranged as a door stop and by that arranged to prevent the door 50 from moving inwards, towards the inside of the shielded area. This means that when closing the door 50, the door stops when the first shank 48b hits the first post 61 (the first frame part 61), which may be seen in Fig. 1b. The limitation means 48 further comprises the second shank 48c, which as mentioned is arranged as a bent part on the opposite side of the base 48a relative the first shank 48b. The second shank 48c and the first shank 48b protrudes from the base 48a in opposite directions referring to the extension of the base 48a and the base 48a comprises a through hole arranged for a screw, such that the limitation means 48 may be fixedly attached to the opening side 51 of the door 50 (the door blade). The second shank 48c is also arranged to be fixedly screwed to the door 50, by that it comprises a couple of screw holes arranged at the second shank 48c, wherein the screwing may be performed in direction from the inside of the shielded area, which may be seen in Fig. 2b. Just at the angle between the base 48a and the first shank 48b is a limiting opening 48d arranged, which limiting opening 48d is arranged to enclose the first end 41 of the safety latch 40 in the mounted position of the safety latch 40 and limitation means 48 on the door 50, wherein the safety latch 40 is limited to a substantially horizontal extension, and only possible to pivot around the pivot point p such that the free second end 42 of the safety latch is limited in its movement in the vertical direction Y, with a maximum vertical motion of a distance $h_{max}$.

As can be seen in Fig. 6a, the door 50 is about to be closed, wherein the free second end 42 of the safety latch 40 is about to be introduced between the stop 11 and the support 21 of the bracket 30. The free end 42 is if needed guided by the shackle part 32, which is discussed in connection to Fig.3a-d. When the free second end 42 enters the opening 15, between the stop 11 and the support 21, the upper edge 45a of the hook part 45 of the safety latch 40 enters below the stop 11 and the lower side 44 of the safety latch 40 eventually starts to slide on the support 21. When the transition point 44a of the lower side 44 reaches the support, the free second end 42 has passed the stop 11 and rises a bit behind the stop 11, and then lowers a bit again, before it ends up in an end position which is the same as a closed position of the door 50.

Figs. 7a-c show different stages during a closing of the door 50 in a closing horizontal direction X, and the bracket 30 is mounted on the first post 61 and the safety latch 40 is mounted at the door 50 in a position corresponding to the position of the bracket 30, in the vertical direction Y. In Fig. 7a, the door 50 is in a position such that the safety latch 40 is about to pass the first post 61 on the door opening side of the same, just before the free second end 42 of the safety latch 40 enters the opening 15 of the bracket 30, between the stop 11 and support 21. The first end 41 of the safety latch is limited in its motion by the limitation means 48, wherein the "resting position" of the safety latch 40 is substantially horizontal and the extension of the same is substantially horizontal in the horizontal closing direction X. In Fig. 7b, the door 50 is closer to the first post 61 and the free end 42 of the safety latch 40 is introduced in the opening 15 of the bracket 30. The lower side 44 of the safety latch 40 has just got contact with the support 21, along a part of the lower side 44, below the hook part 45, but the transition point 44a of the lower side 44 of the safety latch 40 has not yet reached the support 21 in this position. By that the third vertical distance $h_3$, between the upper edge 45a of the hook part 45 and the fictive first point 44b of the lower side 44, is less than the first distance $h_1$, between the stop 11 and support 21, the hook part 45 may pass between the stop 11 and support 21 in this position (see also Figs. 4-5). In Fig. 7c, the door 50 has entered its closed position in the door opening between the first and second posts 61, 62, and in this position, the transition point 44a of the lower side 44 of the safety latch 40 has passed the support 21. As seen in the figure, the upper edge 45a of the hook part 45 of the safety latch 40 is in the closed position of the door 50 at a slightly higher level than the level of the stop 11. This depends on the design of the safety latch 40, wherein the part of the lower side 44 of the safety latch 40 which is arranged between the transition point 44a and the pivot point p, is designed such that this part of the lower side 44 is more or less horizontal and the other part of the lower side 44, which is arranged between the transition point 44a and the second end 42, is bent upwards. Thus, the safety latch 40 is in a "ready position" for engagement in a quick manner with the stop 11.

In Fig. 7d, the door 50 is subjected to a high force, for example by a heavy object hitting the door from the inside of the shielded area (from a machine side so to speak), wherein a high opening acceleration of the door 50 is achieved in direction of the dotted arrow. When this happens, the safety latch 40 of course gets the same acceleration, wherein the acceleration force transverse the gravity force is so high that the gravity force is exceeded. Due to the design of the lower side 44 of the safety latch, with its "hill-shaped" transition point 44a, the safety latch 40 slides with high speed on the lower side 44 for a start, but then, when the transition point 44a passes the support 21, the second end 42 with its hook part 45 gets a high speed upwards and stops against the stop 11, wherein an accidental opening of the door 50 is prevented. The stop 11 comprises the upper slit 11a, which has a function of keeping the upper edge 45a of the hook part 45 of the safety latch 40 in a more secure position, at least for a short while, when the safety latch 40 has engaged with the stop 11.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein and are intended to be encompassed hereby.

## Claims

1. A door arrangement (1) comprising:

   - a door (50),
   - a first frame part (61),
   - a second frame part (62), wherein the first and second frame parts (61, 62) extends in a vertical direction (Y), wherein the first frame part (61) faces an opening side (51) of the door (50) and the second frame part (62) faces a hinge side (52) of the door (50), wherein the door (50) is hingely connected to the second frame part (62), the door arrangement (1) further comprising:

   - a stop (11) fixedly arranged at the first frame part (61),
   - a support (21) fixedly arranged at the first frame part (61), wherein the support (21) is arranged below the stop (11) in the vertical direction (Y), at a first vertical distance ($h_1$) from the stop (11), wherein an opening (15) is defined between the stop (11) and the support (21), wherein the first vertical distance ($h_1$) in the vertical direction (Y) defines the height of the opening (15),
   - a safety latch (40) comprising a first end (41) and an opposite free second end (42), wherein the safety latch (40) is pivotal around a pivot point (p) by that the first end (41) is pivotally attached to the door (50), at the opening side (51) of the door (50), at a vertical position in the vertical direction (Y), which substantially corresponds with the vertical position of the opening (15), wherein the safety latch (40) in its pivotal attachment to the door (50) extends in a substantially horizontal direction (X), by that the safety latch (40) is arranged to be limited in its pivotal movement around the pivot point (p), such that the free second end (42) has a maximum movement ($h_{max}$) in the vertical direction (Y),

   wherein, referring to its pivotal attachment to the door (50), the safety latch (40) comprises an upper side (43) and an opposite lower side (44), wherein the safety latch (40) comprises a hook part (45) arranged at the free second end (42) and which protrudes from the upper side (43) in direction away from the lower side (44), wherein the safety latch (40) is introducible in the opening (15), and wherein the hook part (45) is arranged to interact with the stop (11),

   wherein the lower side (44) of the safety latch (40) is arranged to interact with the support (21), and which lower side (44) comprises a transition point (44a), arranged between the first end (41) and the second end (42) of the safety latch (40), at which transition point (44a) the lower side (44) bends upwards towards the free second end (42).

2. Door arrangement (1) according to claim 1, wherein a first measure ($a_1$) between the upper side (43) and the lower side (44) of the safety latch (40), decreases in direction from the transition point (44a) towards the free second end (42), at least along a part of the lower side (44) from the transition point (44a) towards the free second end (42) .

3. Door arrangement (1) according to claim 1 or 2, wherein a second measure ($a_2$) between the upper side (43) and the lower side (44) of the safety latch (40), decreases in direction from the transition point (44a) towards the first end (41), at least along a part of the lower side (44) from the transition point (44a) towards the first end (41).

4. Door arrangement (1) according to any of the preceding claims, wherein a second vertical distance ($h_2$) in the vertical direction (Y), between an upper edge (45a) of the hook part (45) and the transition point (44a) of the lower side (44) is greater than the first distance ($h_1$) between the stop (11) and the support (21).

5. Door arrangement (1) according to any of the preceding claims, wherein the safety latch (40) is introducible in the opening (15), by that a third vertical distance ($h_3$) in the vertical direction (Y), between the upper edge (45a) of the hook part (45) and a (fictive) first point (44b) of the lower side (44), arranged vertically below the upper edge (45a) of the hook part (45), is less than the first distance ($h_1$) between the stop (11) and the support (21), and less than the second vertical distance ($h_2$) between the upper edge (45a) of the hook part (45) and the transition point (44a) of the lower side (44).

6. Door arrangement (1) according to claim 5, wherein the transition point (44a) is arranged between the first end (41) and the first point (44b) of the lower side (44) of the safety latch (40).

7. Door arrangement (1) according to any of the preceding claims, wherein the stop (11) and the support (21) are parts of a common bracket (30), which comprises a bracket body (31) which is fixedly arranged at the first frame part (61).

8. Door arrangement (1) according to claim 6, wherein the stop (11) and the support (21) protrudes from a first body part (31a) of the bracket body (31), which first body part (31a) faces the second frame part (62), in direction away from the first frame part (61) towards the second frame part (62).

9. Door arrangement (1) according to claim 7, wherein the stop (11) and the support (21) are connected to each other by a shackle part (32), which connects the stop (11) and the support (21), wherein the shackle part (32) is distal from the first body part (31a) of the bracket body (31), wherein a first horizontal width ($w_1$) between the first body part (31a) of the bracket body (31) and the shackle part (32) defines a width of the opening (15), wherein the safety latch (40) is introducible in the opening (15).

10. Door arrangement (1) according to claim 8, wherein the shackle part (32) is bent relative the stop (11) and the support (21), wherein the shackle part (32) has an angle ($\alpha$) relative the first body part (31a) of the bracket body (31).

11. Door arrangement (1) according to claim 9, wherein the angle ($\alpha$) of shackle part (31) relative the first body of the bracket (30) is between $0° < \alpha \leq 60°$.

12. Door arrangement (1) according to any of the preceding claims, wherein a horizontal distance between the pivot point (p) and a center of gravity of the safety latch (40) is defined as a horizontal first distance ($d_1$), and a horizontal distance between the pivot point (p) and the hook part (45) is defined as a horizontal second distance ($d_2$), and when the door (50) is in its closed position, in which the safety latch (40) is introduced in the opening (15), a horizontal distance between the stop (11) and the hook part (45) is defined as a horizontal third distance ($d_3$) and a vertical distance between the upper edge (45a) of the hook part (45) and a lower edge (11c) of the stop (11), is defined as a vertical fourth distance ($d_4$), wherein a correlation of the horizontal first, horizontal second, horizontal third and vertical fourth distances

$$\sqrt{\frac{2*d_4}{g*\frac{d_2}{d_1}}} = \sqrt{\frac{2*d_3}{a}}$$

fulfils the expression , where g is standard gravity, wherein a is defined as the horizontal acceleration of the safety latch (40) relative the stop (11), wherein $a > 4{*}g$.

13. Door arrangement (1) according to any of the preceding claims, wherein a center of gravity of the safety latch (40) is arranged between the pivot point (p) of the safety latch (40) and the transition point (44a) of the lower side (44) of the safety latch (40).

14. Door arrangement (1) according to any of the preceding claims, wherein the first end (41) of the safety latch (40) is distal from the pivot point (p), wherein the first end (41) and the free second end (42) are arranged on opposite sides of the pivot point (p), wherein the safety latch (40) is limited in its pivotal movement around the pivot point (p) by limitation means (48), arranged on the opening side (51) of the door (50), on opposite sides of the first end (41) of the safety latch (40).

Fig. 1b

Fig. 1a

Fig. 2b

Fig. 2a

Fig. 3a

Fig. 3b

Fig. 3c

Fig. 3d

Fig. 4

Fig. 5

1

61

30

32

11

42

50

48

41

$h_1$

$h_{max}$

15

40

44a

21

p

48

Y

X

**Fig. 6a**

48

48b

48c

48d

48a

**Fig. 6b**

Fig. 7a

Fig. 7b

Fig. 7c

Fig. 7d

Europäisches
Patentamt

European
Patent Office

Office européen
des brevets

# EUROPEAN SEARCH REPORT

Application Number

**EP 23 16 3897**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 311 339 B2 (FPI FIREPLACE INTERNATIONAL L) 25 December 2007 (2007-12-25) * the whole document * | 1-14 | INV. E05C3/14 E05B15/00 F16P1/00 E05B65/00 E05B51/02 |
| A | US 1 567 867 A (SCHRADER THOMAS O) 29 December 1925 (1925-12-29) * the whole document * | 1 | |
| A | US 1 582 884 A (SCHRADER THOMAS O) 27 April 1926 (1926-04-27) * the whole document * | 1 | |
| A | CN 216 446 816 U (DONGGUAN TONGGUAN MAINTENANCE AND TRANSP ELECTRONIC HARDWARE SCIENCE A) 6 May 2022 (2022-05-06) * the whole document * | 1 | |

TECHNICAL FIELDS
SEARCHED       (IPC)

E05C
E05B
F16P

The present search report has been drawn up for all claims

| Place of search | Date of completion of the search | Examiner |
|---|---|---|
| The Hague | 9 August 2023 | Ansel, Yannick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 16 3897

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2023

| Patent document cited in search report | | Publication date | Patent family member(s) | | Publication date |
|---|---|---|---|---|---|
| US 7311339 | B2 | 25-12-2007 | CA | 2528981 A1 | 17-02-2005 |
| | | | US | 2005067841 A1 | 31-03-2005 |
| | | | US | 2008061562 A1 | 13-03-2008 |
| | | | WO | 2005014957 A2 | 17-02-2005 |
| US 1567867 | A | 29-12-1925 | NONE | | |
| US 1582884 | A | 27-04-1926 | NONE | | |
| CN 216446816 | U | 06-05-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2602407 B1